# EUROPEAN PATENT SPECIFICATION

(11) **EP 0 911 439 B1**
(45) Date of publication and mention of the grant of the patent: **28.11.2001**
(21) Application number: 98115667.2
(22) Date of filing: 20.08.1998
(51) Int. Cl.: D06F 39/00

(54) **Automatic washing machine with energy recovery arrangement**
Waschmaschine mit Einrichtung zur Energierückgewinnung
Machine à laver avec dispositif de récupération d'énergie

(30) Priority: 27.10.1997 IT PN970057
(43) Date of publication of application: 28.04.1999
(73) Proprietor: Electrolux Zanussi S.p.A., 33170 Pordenone (IT)
(72) Inventor: Centis, Giovanni, 33074 Fontanafredda, Pordenone (IT)
(74) Representative: Busca, Luciano

(56) References cited:
- EP-A- 0 771 898
- EP-A- 0 800 785
- FR-A- 2 289 658
- FR-A- 2 706 915
- US-A- 2 931 199

## Description

The present invention refers to an automatic washing machine provided with an arrangement adapted to enable water and, preferably, also heat to be recovered in view of obtaining an overall energy saving effect.

Washing machines provided with arrangements for recovering water and, possibly also heat from previously heated-up water are already largely known in the art.

A dishwashing machine is for instance known from EP-A-0 669 097 to be provided with a reservoir adapted to store the water from the last or final rinse phase of the machine in view of using it again as wash water during a subsequent washing cycle of the same machine.

On the other hand, as disclosed in EP-A-0 287 990, the heat contained in the hot water being discharged, ie. sent to the drain, can be transferred by means of a heat exchanger to the fresh inflow water let into a washing machine for a subsequent washing cycle which the same washing machine is required to perform.

However, prior-art solutions developed in view of recovering water and/or heat are undesirably complex and unreliable, owing mainly to the fact that they generally require a number of actuators, with related control means, to control the operation of at least a water storage reservoir and the therewith associated energy recovery system.

A particularly simple solution in view of an effective energy recovery action is described in EP-A-0 800 785, in which a multifunctional reservoir is provided to communicate with the washing vessel of a dishwashing machine via a bottom aperture connected directly to the delivery side of a discharge pump. The reservoir is in a heat-exchange relation with the vessel and communicates with the ambient through a valve that is controlled by the programme sequence control switch of the machine to open during a discharge phase so as to enable the reservoir to be filled with hot water being discharged from the washing vessel of the machine. The same valve is then closed temporarily to prevent the reservoir from emptying; it is finally opened again in order to enable the water stored in the reservoir to flow back into the washing vessel of the machine, through said bottom aperture, in view of being used again.

Such a solution, however, turned out to be undesirably critical in practice, owing mainly to the difficulties found in preventing substantial water losses to occur in the long run in correspondence of said bottom aperture of the reservoir, whereas said water should on the contrary be stored in the same reservoir. As a result, the overall operation of the machine turns out to be undesirably unreliable.

EP-A-0 771 898, that forms the basis for the introductory clause of claim 1, discloses a washing machine with a rinsing-water recovery reservoir provided with a siphon for discharging into a washing tank, the siphon having an apex at a level above the level to which the reservoir is filled with recovered water. The priming of the siphon and the consequent discharge of the recovered water into the washing tank is determined by the admission to the reservoir of an amount of supplementary water which undesirably results in a corresponding waste of energy.

It therefore is a main purpose of the present invention to provide an automatic washing machine provided with an energy recovery arrangement that is not only simple and effective, but also positively reliable in the long run.

According to the present invention, such an aim is reached in an automatic washing machine with an energy recovery arrangement embodying the features and characteristics as recited in the appended claims.

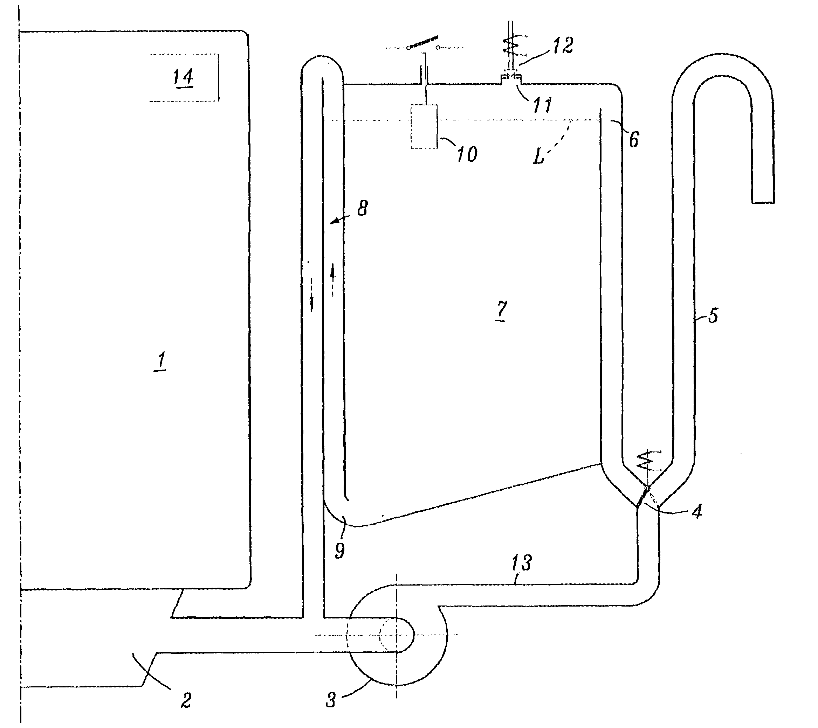

The features and advantages of the present invention will anyway be more readily understood from the description which is given below by way of non-limiting example. The description itself is given with reference to the accompanying drawing, in which the sole Figure appearing there illustrates schematically the main component parts of such a washing machine according to a preferred embodiment of the present invention.

Said automatic washing machine is preferably a domestic dishwashing machine comprising a washing vessel 1 provided on the bottom with a sump 2 for collecting the water that can be heated up there by means of an electric heating element controlled by the programme sequence control switch 14 of the machine. For reasons of greater simplicity of this description, such a heating element is not shown in the Figure. The same applies to the water filling circuit, ie. the circuit provided to let the water into the vessel 1. Both said element and said circuit can anyway be implemented as described in the afore mentioned EP-A-0 800 785

The sump 2 is in communication with the intake or suction side of a discharge pump 3, whose delivery 13 can be selectively connected, through a diverter 4 controlled by the programme sequence control switch 14, to either a discharge conduit 5 or the inlet 6 of at least a storage reservoir 7.

The reservoir 7 is preferably arranged on the outside of the washing vessel 1, with which it may however be in a heat-exchange relation such as this is described for instance in the afore mentioned EP-A-0 800 785.

The inlet 6 is provided in an upper portion, ie. on top of the storage reservoir and is preferably made in the form of an overflow baffle extending above a highest possible filling level L.

The reservoir 7 is also provided with an outlet 8 made in the form of a siphon-like arrangement extending with a priming edge thereof above said maximum filling level L and adapted to set the bottom 9 of the reservoir in communication with the sump 2, upstream of the discharge pump 3.

In a preferred manner, a level sensor 10 is also provided. Such a sensor can for instance be associated to the programme sequence control switch 14 and be adapted to trip, ie. respond to the water in the reservoir 7 rising above the afore cited level L.

Finally, the reservoir 7 comprises at least an upper venting aperture 11 adapted to communicate with the outside ambient through a bleeder valve 12 that is controlled by the programme sequence control switch of the machine and preferably is of the normally closed type.

In a per sè known manner, the washing vessel 1 is capable of being filled with water from the mains for carrying out, under the control of the programme sequence control switch 14, operational cycles that comprise at least a washing phase and/or at least a rinsing phase. As this will be described in greater detail further on, the reservoir 7 is additionally adapted to store at least part of the water from at least one of the above cited washing and/or rinsing phases in view of enabling it to be used again during a subsequent operational phase of the machine. Therefore, the general operation of the dishwashing machine is substantially known, so that only the peculiar functional features of the automatic washing machine according to the present invention will be described below by way of non-limiting example.

Let us assume that the dishwashing machine has completed a traditional washload rinsing phase, so that the collection sump 2 is full of preferably heated-up water that is desirably recovered in view of a subsequent reutilization thereof, whereas the reservoir 7 is empty.

Said rinsing phase is followed by a phase in which the water is transferred, wherein the programme sequence control switch 14 of the machine causes the valve 12 to open, the discharge pump 3 to start operating, and the diverter 4 to be switched into an operating position (shown with a dashed line in the Figure) in which the delivery side 13 of the pump is in communication with the inlet 6 of the recovery reservoir.

Almost the total amount of water contained in the sump 2 is then pumped into the reservoir 7, which therefore correspondingly vents air through the aperture 11. In a generally known manner, however, a residual amount of water remains on the bottom of the collection sump 2.

In the above cited water transfer phase, the water in the reservoir 7 does not normally rise above the maximum level L, so that the siphon 8 is inactive and without any effect on the operation.

It should be noticed that the level sensor 10 merely answers a safety purpose. It in fact has the task of detecting the possible occurrence of anomalous conditions of the reservoir 7 filling up to an excessive extent, in which case the programme sequence control switch 14 can therefore trip in the most appropriate manner. For instance, it can cause the pump 3 to be de-energized and/or a discharge phase to be started and carried out in the manner as substantially described further on.

In order to carry out a phase for discharging the water contained in the sump 2, the programme sequence control switch 14, with the valve 12 in its closed state, causes the pump 3 to be operated and the diverter 4 to be switched into a normal resting position thereof (shown with a continuous line in the Figure) in which the delivery 13 of the pump is connected to the drain 5. As a result, the pump 3 sends the water contained in the sump 2 straight to the drain 5, while the closed state of the venting aperture 11 and the inlet 6 of the reservoir 7 prevents the pump 3 from taking in water also from the same reservoir through the siphon 8.

Therefore, thanks to the fact that the inlet and the outlet of the storage reservoir 7 are connected to the pump 3 in the above described manner, ie. via the diverter 4 and the siphon 8, respectively, the operation of the dishwashing machine can go on in a traditional way, according to the requirements and needs, even when said reservoir is full of water.

In a per sè known manner, the heat exchange between the washing vessel 1 of the machine and the reservoir 7 enables also heat to be recovered to a certain extent from the water stored in the reservoir itself, in the case that such a water has been previously heated up for process purposes.

The reservoir 7 will only be emptied when the programme sequence control switch 14, for instance in view of carrying out a washing phase in a subsequent operation cycle of the machine, causes, with the valve 12 in its closed state, the diverter 4 to switch into the position in which the inlet 6 is open (shown with a dashed line in the Figure) and the discharge pump 3 to be operated transitorily, eg. for a period of 5 seconds. Under these conditions, the delivery 13 of the pump creates, through the inlet 6, a pressure in the reservoir 7 that pushes the water stored therein so as to cause it to move upwards along the rising portion of the siphon 8, until the siphon itself is primed.

It should be noticed that the transitory priming of the pump 3 will be ensured even without any need for water to be let into the washing vessel 1, thanks to the afore mentioned presence of residual water in the sump 2.

In any case, the priming of the siphon 8 will cause the whole amount of water to be transferred from the reservoir 7 to the sump 2, where such a water can then be reused for the operational phase to be carried out.

Upon completion of such an operational phase, the water in the sump 2 can be discharged in the afore described manner by a traditional operation of the pump 3, with the diverter 4 set in its resting position, ie. the position in which the inlet 6 is closed.

It should also be noticed that the described energy recovery arrangement is capable of being implemented with the use of only a low number of component parts that are inherently simple and reliable and, furthermore, do not imply any critical operating condition. In particular, for the washing machine to be able to operate correctly no need actually arises for the bleeder valve 12 to always ensure a perfect seal, since the maintenance of the water in the reservoir 7 is ensured by the overflow levels of the inlet 6 and the siphon 8. The same considerations apply to the diverter 4 which shall not necessarily ensure a watertight sealing effect in either of its above described positions, but is only required to create a kind of draft for "inviting" the water delivered by the pump 3 to flow towards the preferential path as determined each time by the programme sequence control switch 14. The latter can furthermore be a simple timer switch of the electromechanical type, since the above described operation can be obtained with few simple actuations of elementary component parts.

Conclusively, the washing machine according to the present invention can be implemented by making use of low-cost component parts, with obvious advantages of an economical nature.

## Claims

1. Automatic washing machine comprising a washing vessel (1) connected to a drain conduit (5) through a pump (13) and fillable with water to carry out, under the control of a programme sequence control switch (14) operational cycles comprising at least a washing phase and/or a rinsing phase, said washing machine further including at least a reservoir (7) having an inlet (6) and an outlet (8) and adapted to store at least part of the water from at least one of said phases in view of a reuse of said water during a subsequent operational phase, diverter means (4) being adapted to be switched from a resting position to an operating position, and vice-versa, in which the delivery (13) of the pump (3) is connected to said drain conduit (5) and said inlet (6) of the reservoir (7), respectively, said outlet of the reservoir (7) being in communication with the washing vessel (1), upstream of the pump (3), via a siphon-like arrangement (8) that has a priming level which is higher than a pre-determined maximum filling level (L), **characterized in that** the reservoir (7) is capable of communicating with the outside ambient through at least an upper aperture (11) provided with normally closed valve means (12) controlled by the programme sequence control switch (14) to open during at least a phase in which the pump (3) is operated with said diverter means (4) in said operating position thereof, so as to enable the reservoir (7) to substantially fill up with the water flowing in from the washing vessel, and that said pump (3) is adapted to be operated transitorily with said diverter means (4) set in said operating position thereof, so as to prime the siphon-like arrangement (8) and then enable the water contained in the reservoir (7) to be transferred into the washing vessel (1) through the same siphon-like arrangement.

## Patentansprüche

1. Automatische Spülmaschine, die einen Spülbehälter (1) umfasst, der mit einer Abflussleitung (5) über eine Pumpe (13) verbunden ist und mit Wasser gefüllt werden kann, um, von einem Programmablauf-Steuerschalter (14) gesteuert, Funktionszyklen auszuführen, die wenigstens eine Spülphase und/oder eine Klarspülphase umfassen, wobei die Spülmaschine des Weiteren wenigstens einen Vorratsbehälter (7) mit einem Einlass (6) und einem Auslass (8) enthält und wenigstens einen Teil des Wassers aus wenigstens einer der Phasen aufnimmt, um das Wasser während einer folgenden Funktionsphase wieder zu verwenden, wobei eine Umleiteinrichtung (4) aus einer Ruheposition in eine Funktionsposition und umgekehrt umgeschaltet werden kann, in denen die Förderseite (13) der Pumpe (3) mit der Abflussleitung (5) bzw. dem Einlass (6) des Vorratsbehälters (7) verbunden ist, wobei der Auslass des Vorratsbehälters (7) über eine siphonartige Anordnung (8) stromauf von der Pumpe (3) mit dem Spülbehälter (1) in Verbindung steht, die einen Vorfüllpegel hat, der höher ist als ein vorgegebener maximaler Füllpegel (11), **dadurch gekennzeichnet, dass** der Vorratsbehälter (7) mit der Außenumgebung über wenigstens eine obere Öffnung (11) in Verbindung treten kann, die mit einer normalerweise geschlossenen Ventileinrichtung (12) versehen ist, die von dem Programmablaufsteuerschalter (14) so gesteuert wird, dass sie sich während wenigstens einer Phase, in der die Pumpe (3) betätigt wird und sich die Umleiteinrichtung (4) in der Funktionsposition befindet, öffnet, so dass sich der Vorratsbehälter (7) im wesentlichen mit dem Wasser füllen kann, das aus dem Spülbehälter einströmt, und
dass die Pumpe (3) vorübergehend betrieben werden kann, wenn die Umleiteinrichtung (4) in die Funktionsposition gebracht ist, um die siphonartige Anordnung (3) vorzufüllen und dann das Weitereiten des in dem Vorratsbehälter (7) enthaltenen Wassers über die siphonartige Anordnung in den Spülbehälter (1) zu ermöglichen.

## Revendications

1. Machine à laver automatique comprenant une cuve de lavage (1) reliée à une canalisation de vidange (5) par l'intermédiaire d'une pompe (13) et pouvant être remplie avec de l'eau afin d'exécuter, sous le contrôle d'un commutateur de commande de séquence de programme (14), des cycles de fonctionnement comprenant au moins une phase de lavage et/ou une phase de rinçage, ladite machine à laver comprenant en outre au moins un réservoir (7) présentant une entrée (6) et une sortie (8) et adapté de façon à conserver au moins une partie de l'eau d'au moins l'une desdites phases en vue de réutiliser ladite eau au cours d'une phase de fonctionnement ultérieure, des moyens de dérivation (4) étant adaptés de façon à pouvoir être commutés d'une position arrêt à une position marche, et vice-versa, dans laquelle le refoulement (13) de la pompe (3) est relié à ladite canalisation de vidange (5) et à ladite entrée (6) du réservoir (7), respectivement, ladite sortie du réservoir (7) étant reliée à la cuve de lavage (1), en aval de la pompe (3), par l'intermédiaire d'un dispositif de type siphon (8) pourvu d'un niveau d'amorçage plus élevé qu'un niveau de remplissage maximum prédéterminé (L), **caractérisée en ce que** le réservoir (7) est capable de communiquer avec l'extérieur environnant par l'intermédiaire d'au moins une ouverture supérieure (11) équipée d'un moyen formant valve normalement fermé (12) contrôlé par le commutateur de commande de séquence de programme (14) afin de s'ouvrir pendant au moins une phase au cours de laquelle la pompe (3) et actionnée avec lesdits moyens de dérivation (4) se trouvant dans ladite position de fonctionnement de ceux-ci, afin de permettre au réservoir (7) de se remplir sensiblement avec l'eau s'écoulant de la cuve de lavage, et **en ce que** ladite pompe (3) est adaptée pour être actionnée de manière transitoire avec lesdits moyens de dérivation (4) commutés dans ladite position marche de ceux-ci, de manière à amorcer le dispositif de type siphon (8) et ensuite permettre à l'eau contenue dans le réservoir (7) d'être transférée dans la cuve de lavage (1) par l'intermédiaire dudit dispositif de type siphon.
